# EUROPÄISCHE PATENTSCHRIFT

(11) **EP 0 725 522 B1**
(45) Veröffentlichungstag und Bekanntmachung des Hinweises auf die Patenterteilung: **28.11.2001**
(21) Anmeldenummer: 96101508.8
(22) Anmeldetag: 02.02.1996
(51) Int. Cl.: H04L 12/43, H04L 29/02, H04B 1/20, B60R 16/02

(54) **Verfahren zur gemeinsamen Übertragung von Quell- und Steuerdaten zwischen über Datenleitungen verbundenen Datenquellen und -senken**
Method for combined transmission of digital source and control data between data sources and sinks linked by data transmission lines
Procédé pour la transmission combinée de signaux numériques de données de source et de contrôle entre des sources et des récepteurs de données reliés par des lignes de transmission

(30) Priorität: 02.02.1995 DE 19503213
(43) Veröffentlichungstag der Anmeldung: 07.08.1996
(73) Patentinhaber: BECKER GmbH, D-76307 Karlsbad (DE)
(72) Erfinder: Stiegler, Andreas, D-76307 Karlsbad (DE); Hetzel, Herbert, D-76356 Weingarten (DE); Mauderer, Hans-Peter, D-76576 Gaggenau (DE); Winkelmann, Matthias, D-76199 Karlsruhe (DE)
(74) Vertreter: Patentanwälte Westphal, Mussgnug & Partner

(56) Entgegenhaltungen:
- EP-A- 0 519 111
- GB-A- 2 276 796

## Beschreibung

Die Erfindung betrifft ein Verfahren zur gemeinsamen Übertragung von digitalen Quell- und Steuerdaten zwischen über Datenleitungen verbundenen Datenquellen und -senken, bei dem die Quell- und Steuerdaten in einem Format übertragen werden, welches eine getaktete Folge von einzelnen Bitgruppen gleicher Länge vorschreibt, in denen für die Quell- und Steuerdaten jeweils bestimmte Bitpositionen reserviert sind, wobei die für die Quelldaten reservierten Bitpositionen innerhalb einer Bitgruppe einen zusammenhängenden Bereich bilden. Dabei werden über eine Datenleitung die Quell- und Steuerdaten in einem zu einem Taktsignal synchronen kontinuierlichen Datenstrom übertragen. Das Taktsignal wird von einem einzigen Teilnehmer generiert. Alle anderen Teilnehmer synchronisieren sich auf dieses Taktsignal.

Ein derartiges Verfahren ist aus EP-A-05 19 111 bekannt.

Davon zu unterscheiden sind rein asynchrone Datenübertragungsverfahren, wie paketorientierte Datenübertragungsverfahren z. B. ATM-Verfahren. Das sogennannte MADI-Verfahren ist für derartige asynchrone Datenübertragungsverfahren konzipiert.

Ein das MADI-Verfahren anwendendes Datenübertragungsverfahren ist in GB-A-2 276 796 beschrieben.

Die Erfindung ist jedoch auf die Verwendung eines synchronen Verfahrens gerichtet.

Verfahren dieser Art werden überall dort eingesetzt, wo verschiedenartige elektrische und elektronische Geräte, die untereinander Informationen austauschen sollen, in teilweise komplizierter Weise mittels Datenleitungen miteinander vernetzt sind. So kann beispielsweise im Audiobereich die Kommunikation zwischen miteinander vernetzten Datenquellen einerseits, wie zum Beispiel CD-Spielern, Radioempfängern und Kassettenrekordern, und den damit verbundenen Datensenken andererseits, wie beispielsweise Verstärker-Lautsprecher-Kombinationen, durch ein solches Verfahren gesteuert werden.

Mit der Entwicklung der CD-Spieler hat sich als Übertragungsformat das sogenannte "SPDIF-Format (Sony/Philips-Digital-Interface-Format)", das auch unter der Bezeichnung IEC 958 bekannt ist, als Standard durchgesetzt. Dieses Format schreibt eine Übertragung der Daten in einem aus zwei Subframes bzw. Bitgruppen bestehenden Frame vor, wobei jeder Subframe aus einer Präambel von vier Bits für Steuerdaten, daran anschließenden 24 Bits für Quelldaten und abschließend vier Bits für spezielle Steuerdaten besteht. Jeweils ein Subframe eines Frames ist dem linken Audiokanal und der andere Subframe dem rechten Audiokanal zugeordnet.

Der starre Aufbau dieses Formats ist nachteilig, da er sich grundsätzlich nur für die Übertragung von zwei Kanälen eignet.

Aufgabe der Erfindung ist es, ein Verfahren zur gemeinsamen Übertragung von digitalen Quell- und Steuerdaten anzugeben, das flexibel einsetzbar und insbesondere für die Übertragung zwischen einer Vielzahl von miteinander vernetzten Datenquellen und - senken verwendbar ist.

Gelöst wird diese Aufgabe nach der Erfindung dadurch, daß der für die Quelldaten reservierte Bereich einer Bitgruppe in mehrere Teil-Bitgruppen gleicher Länge unterteilt wird, daß abhängig von den Steuerdaten die jeder Teil-Bitgruppe zugewiesenen Quelldaten einer bestimmten Datenquelle/Datensenke zugeordnet werden, und daß in jeder Bitgruppe innerhalb der für die Steuerdaten reservierten Bereiche zwei Kontroll-Bits vorhanden sind, die zur Übertragung von Kontrollsignalen verwendet werden, wobei die Kontroll-Bits aufeinanderfolgender Bitgruppen jeweils zu einem Kontrollsignal zusammengefaßt werden.

Durch die Aufteilung des für die Quelldaten reservierten Bereichs einer Bitgruppe in mehrere Teil-Bitgruppen gleicher Länge ist eine sehr flexible Zuordnung von einzelnen Teil-Bitgruppen an einzelne Datenquellen und -senken möglich. So können beispielsweise einer ersten Teil-Bitgruppe die digitalen Audiodaten des linken Kanals eines CD-Spielers zugewiesen werden, einer zweiten Teil-Bitgruppe die Audiodaten des zugehörigen rechten Kanals und einer dritten und vierten Teil-Bitgruppe die Videodaten eines ebenfalls an das Netzwerk angeschlossenen Video-CD-Spielers. Auf diese Weise können einer einzigen, erfindungsgemäß mehrere Teil-Bitgruppen aufweisenden Bitgruppe je nach Bedarf Quelldaten mehrerer unterschiedlicher Geräte oder auch nur eines einzigen Gerätes zugewiesen und innerhalb des Netzwerkes übertragen werden. Dabei kann ein Gerät gleichzeitg als Datenquelle und -senke ausgebildet sein, wie das beispielsweise bei einem Kassettenrekorder der Fall ist.

Erfindungsgemäß sind in jeder Bitgruppe innerhalb der für die Steuerdaten reservierten Bereiche zwei Kontroll-Bits vorhanden, die zur Übertragung von Kontrollsignalen verwendet werden Dabei werden die Kontroll-Bits aufeinanderfolgender Bitgruppen jeweils zu einem Kontrollsignal zusammengefaßt. Auf diese Weise können Kontrollsignale beliebiger Art innerhalb des Netzwerkes übertragen werden. Beispielsweise können Kontrollsignale übertragen werden, welche die Zuordnung der den Teil-Bitgruppen zugewiesenen Quelldaten zu den jeweiligen zugehörigen Geräten steuern.

Bevorzugt werden dabei die Kontroll-Bits von jeweils 96 aufeinanderfolgenden Bitgruppen zu einem Kontrollsignal zusammengefaßt. Bei zwei Kontroll-Bits pro Bitgruppe sind somit Kontrollsignale mit einer Länge von 192 Bits verwendbar.

Das Verfahren ist dabei nicht auf die Übertragung von Audiodaten beschränkt, sondern kann zur Übertragung beliebiger Daten verwendet werden. So können beispielsweise neben den eingangs erwähnten Audiogeräten auch Videokameras, Video-CDSpieler, Telefone, Faxgeräte, Mikrofone, CD-Roms oder auch Computer-Festplatten miteinander vernetzt sein. Darüber hinaus können, insbesondere in Kraftfahrzeugen, auch Steuerungs- und Überwachungsgeräte in das Netzwerk einbezogen sein. So ist beispielsweise eine Aufnahme von Überwachungsgeräten für die Funktion von Außenleuchten oder den Reifenluftdruck oder von Geräten für die Messung oder die Steuerung der Motordrehzahl oder des Ladedrucks eines Turboladers möglich. Auf diese Weise kann beispielsweise bei fallendem Reifenluftdruck das Audiosystem einen gespeicherten Text als Warnung über die Lautsprecher abgeben.

Nach einer vorteilhaften Ausführungsform der Erfindung werden für die Teil-Bitgruppen jeweils acht Bits (1 Byte) verwendet. Da in der Digitaltechnik die Zusammenfassung von acht Bits zu einem Byte üblich und daher vielfach durch bestehende Software und Hardware besonders unterstützt wird, kann die Unterteilung des für die Quelldaten reservierten Bereichs einer Bitgruppe in jeweils ein Byte große Teil-Bitgruppen zu einer kostengünstigen und zeitsparenden Bearbeitung der Signale führen.

Nach einer weiteren bevorzugten Ausführungsform wird der für die Quelldaten reservierte Bereich in sechs Teil-Bitgruppen unterteilt. Auf diese Weise können mit einer Bitgruppe gleichzeitig die Quelldaten von bis zu sechs unterschiedlichen Geräten übertragen werden. Es können aber auch lediglich die Quelldaten eines einzigen Geräts mit einer Bitgruppe übertragen werden, wobei dann die Zahl der an Quelldaten übertragbaren Bits pro Gerät sechsmal größer ist als bei einer Übertragung von Quelldaten für sechs verschiedene Geräte. Bei einer Länge der Teil-Bitgruppen von acht Bits können somit pro Bitgruppe gleichzeitig jeweils acht Bits für sechs Geräte oder 48 Bits für ein Gerät oder beliebige dazwischenliegende Kombinationen, zum Beispiel 16 Bits für ein erstes Gerät, acht Bits für ein zweites Gerät und 24 Bits für ein drittes Gerät, übertragen werden.

Nach einer weiteren vorteilhaften Ausführungsform werden für eine gesamte, Quell- und Steuerdaten umfassende Bitgruppe 64 Bits verwendet. Diese Verdoppelung der Bitanzahl gegenüber dem SPDIF-Format führt bei einer gleichzeitigen Verdoppelung der Taktfrequenz zu einer Verdoppelung der Übertragungskapazität.

Nach einer weiteren zweckmäßigen Ausführungsform werden jeweils zwei aufeinanderfolgende Bitgruppen zu einer Haupt-Bitgruppe zusammengefaßt. Bevorzugt werden dabei jeweils 48 aufeinanderfolgende Haupt-Bitgruppen zu einem Block zusammengefaßt. Durch die Zusammenfassung zweier aufeinanderfolgender Bitgruppen zu einer Haupt-Bitgruppe können beispielsweise bei einer Übertragung von Stereo-Audio-Daten die Daten für den linken Kanal der ersten Bitgruppe und die Daten für den rechten Kanal der zweiten Bitgruppe zugewiesen werden. Dadurch ist eine einfache Trennung der beiden Kanäle bei der Übertragung möglich.

Nach einer weiteren zweckmäßigen Ausführungsform werden in jeder Bitgruppe innerhalb der für die Steuerdaten reservierten Bereiche insbesondere vier Bits als Präambel, insbesondere zur Kennzeichnung des Blockanfangs und/oder unterschiedlicher Kanäle, vorgesehen. Beispielsweise kann zu Beginn eines Blocks eine bestimmte Bitfolge den Blockanfang und den linken Kanal kennzeichnen, während innerhalb eines Blockes der Präambel eine davon verschiedene Bitfolge zur Kennzeichnung des linken Kanals zugewiesen wird. Es kann durch die Präambel jedoch nicht nur eine Unterscheidung zwischen dem linken und dem rechten Kanal, sondern zwischen Kanälen beliebiger Art getroffen werden.

Nach einer weiteren vorteilhaften Ausführungsform wird in jeder Bitgruppe innerhalb der für die Steuerdaten reservierten Bereiche einer bestimmten Bitposition eine Links/RechtsKennung zugewiesen, wodurch eine einfache Unterscheidung zwischen dem linken und dem rechten Audiokanal möglich ist. Weiterhin ist durch die Links-/Rechts-Kennung die Kompatibilität mit dem SPDIF-Format gegeben, insbesondere eine einfache Umwandlung des SPDIF-Formats in das erfindungsgemäße Format oder umgekehrt möglich.

Nach einer weiteren bevorzugten Ausführungsform werden in jeder Bitgruppe innerhalb. der für die Steuerdaten reservierten Bereiche insbesondere vier für die Übertragung weiterer Signale geeignete Bits vorgesehen. In diesen Bits können beliebige Daten innerhalb des Netzwerks übertragen werden. Beispielsweise können in diesen Bits Daten unformatiert übertragen werden, wobei die Zuordnung der Daten zu einem im Netzwerk vorhandenen Gerät beispielsweise über in den KontrollBits übertragene Kontrollsignale gesteuert werden kann. Solche unformatierten Daten, die auch "transparente" Daten genannt werden, können beispielsweise Fax-Daten, beliebige Statusdaten oder Telefonkarten-Daten sein. Da diese Daten formatfrei übertragen werden, also keine Codierung erforderlich ist, können über diese Bits insbesondere Daten für zeitkritische Anwendungen übertragen werden.

Nach einer weiteren zweckmäßigen Ausführungsform werden in jeder Bitgruppe innerhalb der für die Steuerdaten reservierten Bereiche einer bestimmten Bitposition eine Paritäts-Kennung zugewiesen.

Nach einer weiteren vorteilhaften Ausführungsform wird in jeder Bitgruppe innerhalb der für die Steuerdaten reservierten Bereiche einer bestimmten Bitposition eine SPDIF-Block-Kennung und/oder eine Validierungs-Kennung und/oder eine User-Kennung und/oder eine Kanal-Status-Kennung zugewiesen. Durch die Vorsehung dieser speziellen Steuerbits, die auch im SPDIF-Format vorhanden sind, ist insbesondere die Kompatibilität zu diesem Format gegeben. Dabei ist durch die SPDIF-Block-Kennung die im SPDIF-Format benötigte Relation zwischen den Steuerbits und dem jeweiligen SPDIF-Blockanfang gegeben.

Nach einer weiteren vorteilhaften Ausführungsform werden als Datenleitungen Lichtwellenleiter und/oder elektrische Leitungen verwendet. Insbesondere bei der Verwendung von Lichtwellenleitern ist eine Datenübertragung mit sehr hoher Geschwindigkeit möglich. Darüber hinaus führt die Verwendung von Lichtwellenleitern zu einem besonders geringen Gewicht und damit zu einer guten Einsetzbarkeit, insbesondere in mobilen Systemen, wie zum Beispiel in einem Kraftfahrzeug.

In einer weiteren bevorzugten Ausführungsform erfolgt die Codierung der einzelnen Bits mittels der Biphase-Codierung. Auf diese Weise kann das Taktsignal, eincodiert in das Datensignal, zusammen mit diesem innerhalb des Netzwerkes übertragen werden. Bevorzugt wird der Takt von einem als Master eingesetzten Netzteilnehmer generiert, wobei die übrigen Netzteilnehmer synchron zum Master arbeiten, indem sie sich beispielsweise über PLL-Schaltungen an den empfangenen Takt anpassen.

Vorteilhaft wird das erfindungsgemäße Verfahren bei einem stationären Kommunikationssystem, insbesondere bei einem Kommunikationssystem im Haushalt verwendet. Dabei kann es sich um ein sogenanntes Multi-Media-Netzwerk-System handeln, das aus den unterschiedlichsten Audio-. Video-, Steuer- und sonstigen Daten erzeugenden und/oder verarbeitenden Netzteilnehmern zusammengesetzt ist.

Darüber hinaus ist das erfindungsgemäße Verfahren sehr vorteilhaft bei einem mobilen Kommunikationssystem, insbesondere bei einem Kommunikationssystem in einem Kraftfahrzeug verwendbar. Gerade die steigende Anzahl der in einem Kraftfahrzeug verwendeten elektronischen Geräte und die notwendige Kommunikation zwischen diesen Geräten kann zu einer sehr vorteilhaften Verwendung des erfindungsgemäßen Verfahrens führen.

Weitere vorteilhafte Ausführungsformen der Erfindung sind in den Unteransprüchen angegeben.

Ein Vorteil des erfindungsgemäßen Verfahrens liegt darin, daß digitale Daten unterschiedlichster Art besonders flexibel zwischen einer beliebigen Anzahl von Geräten übertragen werden können. Dabei kann die Zuordnung der für die Übertragung der Quelldaten vorgesehenen Bitpositionen innerhalb einer Bitgruppe zu den einzelnen Geräten während des Betriebes beliebig geändert werden.

Die Erfindung wird nachfolgend anhand eines Ausführungsbeispiels unter Bezugnahme auf die Zeichnung erläutert; in dieser zeigt:
- Fig. 1: die Aufteilung der Quell- und Steuerdaten bei Übertragung mit dem SPDIF-Format,
- Fig. 2: die Aufteilung der Quell- und Steuerdaten bei Übertragung mit einem Format nach dem erfindungsgemäßen Verfahren und
- Fig. 3: ein beispielsweise in einem Kraftfahrzeug einsetzbares Netzwerk, bestehend aus einer Vielzahl von über cinzelne Leitungsabschnitte verbundenen Netzteilnehmern, bei dem die Übertragung von Daten zwischen den einzelnen Netzteilnehmern mittels des erfindungsgemäßen Verfahrens möglich ist.

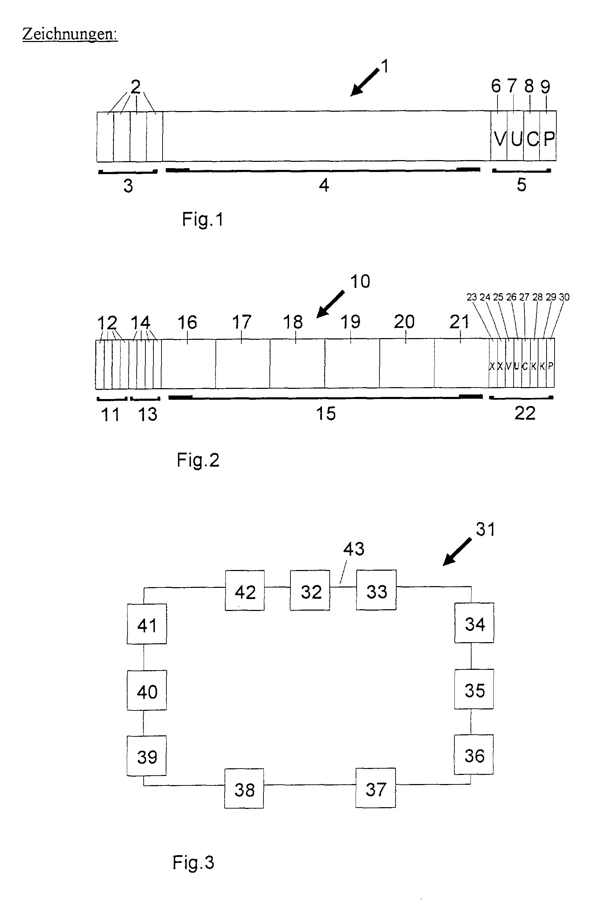

Fig. 1 zeigt eine Bitgruppe 1, welche die kleinste Einheit des aus dem Stand der Technik bekannten Datenformats SPDTF darstellt. Diese Bitgruppe wird auch Subframe genannt und umfaßt 32 Bits. Die ersten vier Bitpositionen 2 bilden einen ersten Bereich 3 für Steuerdaten, die zur Synchronisation und zur Unterscheidung zwischen dem linken und dem rechten Stereokanal dienen.

An diesen ersten Bereich 3 schließt sich ein Bereich 4 an, dessen Bits zur Aufnahme von Quelldaten reserviert sind. Dieser Bereich 4 besitzt eine Länge von 24 Bits. Den Abschluß einer Bitgruppe 1 bildet ein zweiter Bereich 5 von Steuerdaten, welcher vier Bitpositionen 6, 7, 8, 9 umfaßt, die mit einer Validierungs-, einer User-, einer Kanal-Status- und einer Paritäts-Kennung belegt werden können.

Zur Übertragung von Stereo-Audio-Daten, werden jeweils zwei aufeinanderfolgende Bitgruppen 1 zu einer Haupt-Bitgruppe, dem sogenannten Frame, zusammengefaßt, wobei die erste Bitgruppe die Daten des linken und die zweite Bitgruppe die Daten des rechten Audiokanals enthält. Auf diese Weise ist mit diesem Format eine Übertragung digitaler Quelldaten mit maximal 24 Bits Länge und zwei Kanälen möglich.

Fig. 2 zeigt eine Bitgruppe 10, wie sie bei der Übertragung von Daten nach dem erfindungsgemäßen Verfahren verwendet wird, Am Anfang der Bitgruppe 10 befindet sich ein erster für Steuerdaten reservierter Bereich 11, der vier Bitpositionen 12 umfaßt. An den ersten Bereich 11 schließt sich ein zweiter für Steuerdaten reservierter Bereich 13 an, der ebenfalls vier Bitpositionen 14 umfaßt.

Dem zweiten Bereich 13 folgt ein für Quelldaten reservierter Bereich 15, der in sechs Teil-Bitgruppen 16 bis 21 von jeweils acht Bits Länge unterteilt ist.

Das Ende der Bitgruppe 10 bildet ein dritter für Steuerdaten reservierter Bereich 22, der acht Bitpositionen 23 bis 30 zur Aufnahme von Steuerdaten umfaßt.

Insgesamt umfaßt die Bitgruppe 10 64 Bits und ist damit doppelt so lang wie die Bitgruppe 1 nach dem SPDIF-Format, das in Fig. 1 dargestellt ist.

Bei der Übertragung von Daten werden die einzelnen Bitpositionen wie folgt besetzt:

Die vier Bitpositionen 12 des die Präambel der Bitgruppe 10 bildenden ersten Bereichs 11 werden mit einer Bitfolge zur Kennzeichnung des Blockanfangs und/oder unterschiedlicher Kanäle besetzt, Die Verwendung der daran anschließenden vier Bitpositionen 14 des zweiten Bereiches 13 ist nicht fest vorgegeben, so daß diese bei der Übertragung mit beliebigen Daten belegt werden können.

Handelt es sich bei der Bitgruppe 10 um eine Bitgruppe, die einem Blockanfang eines SPDIF-Blockes entspricht, so wird die Bitposition 23 mit einer 1, andernfalls mit einer 0 besetzt. Die Bitposition 24 kennzeichnet, ob es sich um den linken oder den rechten Kanal handelt. So wird beispielsweise bei Übertragung der Quelldaten für den linken Kanal die Bitposition 24 mit einer 1 und bei Übertragung der Quelldaten für den rechten Kanal mit einer 0 belegt.

Die Bitpositionen 25, 26 und 27 werden gemäß den entsprechenden Bitpositionen 6, 7 und 8 des standardisierten SPDIF-Formats und die Bitposition 30 mit einer Paritäts-Kennung belegt.

Die Bitpositionen 28 und 29 von jeweils 96 aufeinanderfolgenden Bitgruppen 10 werden zur Übertragung jeweils eines Kontrollsignals zusammengefaßt. Über diese Kontrollsignale wird beispielsweise die Zuordnung der einzelnen den Teil-Bitgruppen 16 bis 21 zugewiesenen Quelldaten zu bestimmten Teilnehmern eines Kommunikationsnetzwerkes festgelegt.

Fig. 3 zeigt ein ringförmig angeordnetes Kommunikationsnetzwerk 31, das aus einer Vielzahl von Netzteilnehmern 32 bis 42 besteht. Die Netzteilnehmer 32 bis 42 sind über Lichtwellenleiterabschnitte 43 miteinander verbunden. Bei den Netzteilnehmern 32 bis 42 handelt es sich dabei im einzelnen um eine Bedien- und Anzeigeeinheit 32, einen Rundfunkempfänger 33, einen Verstärker 34, Aktivlautsprecher 35, eine Steuereinheit für eine Klimaanlage 36, ein Überwachungsgerät für den Reifenluftdruck 37, ein Navigationssystem 38, ein Telefaxgerät 39, ein Telefon 40, eine Videokamera 41 sowie einen CD-Spieler 42.

Ein solches komplexes Multi-Media-Netzwerk kann beispielsweise in ein Kraftfahrzeug eingebaut werden, wobei die Übertragung der Kommunikationsdaten zwischen den unterschiedlichen Netzteilnehmern mit dem erfindungsgemäßen Verfahren jeweils über einen aus einem einzigen Lichtwellenleiter bestehenden Lichtwellenleiterabschnitt 43 erfolgen kann.

Eine typische Zuordnung der Teil-Bitgruppen 16 bis 21 zu den unterschiedlichen Netzteilnehmern 32 bis 42 während des Betriebs des Netzwerkes kann beispielsweise wie folgt aussehen:

In den Teil-Bitgruppen 16 und 17 einer ersten Bitgruppe 10 werden die Audio-Daten des linken Kanals des CD-Spielers 42, in den Teil-Bitgruppen 18 und 19 Videodaten des linken Kanals der Videokamera 41, in der Teil-Bitgruppe 20 Telefondaten des Telefons 40 und in der Teil-Bitgruppe 21 Faxdaten des Faxgerätes 39 übertragen. In der nachfolgenden Bitgruppe werden die Daten der entsprechenden rechten Kanäle des CD-Spielers 42 und der Videokamera 41 zusammen mit weiteren Telefon- und Faxdaten übertragen.

Im weiteren Betrieb können beispielsweise in den Teil-Bitgruppen 18 und 19 anstelle der Videodaten der Videokamera 41 Quelldaten des Navigationssystems 38 zu der Bedien- und Anzeigeeinheit 32 übertragen werden. Diese neue Zuordnung der Teil-Bitgruppen 18 und 19 zu einem anderen Teilnehmer des Netzwerkes 31 wird über Kontrollsignale, welche in den Bitpositionen 28, 29 aufeinanderfolgender Bitgruppen 10 übertragen werden, gesteuert.

Durch die flexible Zuordnung der Teil-Bitgruppen 16 bis 21 zu den Netzteilnehmern 32 bis 42 ist eine sehr effektive, schnelle und kostengünstige Übertragung von Quelldaten zwischen den Netzteilnehmern 32 bis 42 über einen einzigen aus einzelnen Lichtwellenleiterabschnitten 43 bestehenden Lichtwellenleiter möglich.

## Patentansprüche

1. Synchrones Datenübertragungsverfahren zur gemeinsamen Übertragung von digitalen Quell- und Steuerdaten zwischen über Datenleitungen (43) verbundenen Datenquellen und -senken (32, 33, 34, 35, 36, 37, 38, 39, 40, 41, 42), bei dem die Quell- und Steuerdaten in einem Format übertragen werden, welches eine getaktete Folge von einzelnen Bitgruppen (1, 10) gleicher Länge vorschreibt, in denen für die Quell- und Steuerdaten jeweils bestimmte Bitpositionen reserviert sind, wobei die für die Quelldaten reservierten Bitpositionen innerhalb einer Bitgruppe (1, 10) einen zusammenhängenden Bereich (4, 15) bilden , **dadurch gekennzeichnet, daß** der für die Quelldaten reservierte Bereich (15) einer Bitgruppe (10) in mehrere Teil-Bitgruppen (16, 17, 18, 19, 20, 21) gleicher Länge unterteilt wird, daß abhängig von den Steuerdaten die jeder Teil-Bitgruppe (16, 17, 18, 19, 20, 21) zugewiesenen Quelldaten einer bestimmten Datenquelle/Datensenke (32, 33, 34, 35, 36, 37, 38, 39, 40, 41, 42) zugeordnet werden, und daß in jeder Bitgruppe (10) innerhalb der für die Steuerdaten reservierten Bereiche (11, 13, 22) zwei Kontroll-Bits (28, 29) vorhanden sind, die zur Übertragung von Kontrollsignalen verwendet werden, wobei die Kontroll-Bits (28, 29) aufeinanderfolgender Bitgruppen (10) jeweils zu einem Kontrollsignal zusammengefaßt werden.

2. Verfahren nach Anspruch 1, **dadurch gekennzeichnet, daß** für die Teil-Bitgruppen (16, 17, 18, 19, 20, 21) jeweils acht Bits (ein Byte) verwendet werden.

3. Verfahren nach Anspruch 1 oder 2, **dadurch gekennzeichnet, daß** der für die Quelldaten reservierte Bereich (15) in sechs Teil-Bitgruppen (16, 17, 18, 19, 20, 21) unterteilt wird.

4. Verfahren nach einem der vorhergehenden Ansprüche, **dadurch gekennzeichnet, daß** für eine gesamte Bitgruppe (10) 64 Bits verwendet werden.

5. Verfahren nach einem der vorhergehenden Ansprüche, **dadurch gekennzeichnet, daß** jeweils zwei aufeinanderfolgende Bitgruppen (10) zu einer Haupt-Bitgruppe zusammengefaßt werden.

6. Verfahren nach einem der vorhergehenden Ansprüche, **dadurch gekennzeichnet, daß** jeweils mehrere aufeinanderfolgende Haupt-Bitgruppen zu einem Block zusammengefaßt werden.

7. Verfahren nach Anspruch 6, **dadurch gekennzeichnet, daß** in jeder Bitgruppe (10) innerhalb der für die Steuerdaten reservierten Bereiche (11, 13, 22) vier Bits (12) als Präambel, insbesondere zur Kennzeichnung des Blockanfangs und/oder unterschiedlicher Kanäle, vorgesehen werden.

8. Verfahren nach einem der vorhergehenden Ansprüche **dadurch gekennzeichnet, daß** die Kontroll-Bits (28, 29) von jeweils 96 aufeinanderfolgenden Bitgruppen (10) zu einem Kontrollsignal zusammengefaßt werden.

9. Verfahren nach einem der vorhergehenden Ansprüche, **dadurch gekennzeichnet, daß** in jeder Bitgruppe (10) innerhalb der für die Steuerdaten reservierten Bereiche (11, 13, 22) einer bestimmten Bitposition (24) eine Links/Rechts-Kennung zugewiesen wird.

10. Verfahren nach einem der vorhergehenden Ansprüche, **dadurch gekennzeichnet, daß** in jeder Bitgruppe (10) innerhalb der für die Steuerdaten reservierten Bereiche (11, 13, 22) vier für die Übertragung weiterer Signale geeignete Bits (14) vorgesehen werden.

11. Verfahren nach einem der vorhergehenden Ansprüche, **dadurch gekennzeichnet, daß** in jeder Bitgruppe (10) innerhalb der für die Steuerdaten reservierten Bereiche (11, 13, 22) einer bestimmten Bitposition (30) eine Paritäts-Kennung zugewiesen wird

12. Verfahren nach einem der vorhergehenden Ansprüche, **dadurch gekennzeichnet, daß** in jeder Bitgruppe (10) innerhalb der für die Steuerdaten reservierten Bereiche (11, 13, 22) einer bestimmten Bitposition (23) eine SPDIF-Block-Kennung zugewiesen wird.

13. Verfahren nach einem der vorhergehenden Ansprüche, **dadurch gekennzeichnet, daß** in jeder Bitgruppe (10) innerhalb der für die Steuerdaten reservierten Bereiche (11, 13, 22) einer bestimmten Bitposition (25) eine Validierungs-Kennung zugewiesen wird.

14. Verfahren nach einem der vorhergehenden Ansprüche, **dadurch gekennzeichnet, daß** in jeder Bitgruppe (10) innerhalb der für die Steuerdaten reservierten Bereiche (11, 13, 22) einer bestimmten Bitposition (26) eine User-Kennung zugewiesen wird.

15. Verfahren nach einem der vorhergehenden Ansprüche, **dadurch gekennzeichnet, daß** in jeder Bitgruppe (10) innerhalb der für die Steuerdaten reservierten Bereiche (11, 13, 22) einer bestimmten Bitposition (27) eine Kanal-Status-Kennung zugewiesen wird.

16. Verfahren nach einem der vorhergehenden Ansprüche, **dadurch gekennzeichnet, daß** als Datenleitungen (43) Lichtwellenleiter und/oder elektrische Leitungen verwendet werden.

17. Verfahren nach einem der vorhergehenden Ansprüche, **dadurch gekennzeichnet, daß** die Kodierung der einzelnen Bits mittels der Biphase-Kodierung erfolgt.

18. Verwendung des Verfahrens nach einem der vorhergehenden Ansprüche bei einem stationären Kommunikationssystem.

19. Verwendung des Verfahrens nach einem der Ansprüche 1 bis 18 bei einem mobilen Kommunikationssystem (31).

## Claims

1. Synchronous data transmission method for combined transmission of digital source and control data between data sources and sinks (32, 33, 34, 35, 36, 37, 38, 39, 40, 41, 42) connected via data lines (43), in which method the source and control data are transmitted in a format which specifies a clocked sequence of individual bit groups (1, 10) of equal length, in which certain bit positions are reserved respectively for the source and control data, the bit positions reserved for the source data within a bit group (1, 10) forming a continuous zone (4, 15), **characterised in that** the zone (15) of a bit group (10) reserved for the source data is subdivided into a plurality of sub-bit groups (16, 17, 18, 19, 20, 21) of equal length, **in that** the source data allocated to each sub-bit group (16, 17, 18, 19, 20, 21) are associated with a certain data source/data sink (32, 33, 34, 35, 36, 37, 38, 39, 40, 41, 42) as a function of the control data, and **in that** two check bits (28, 29) are present in each bit group (10) within the zones (11, 13, 22) reserved for the control data, which check bits (28, 29) are used to transmit check-back signals, the check bits (28, 29) of successive bit groups (10) being combined in each case into a check-back signal.

2. A method according to claim 1, **characterised in that** in each case eight bits (one byte) are used for the sub-bit groups (16, 17, 18, 19, 20, 21).

3. A method according to claim 1 or claim 2, **characterised in that** the zone (15) reserved for the source data are subdivided into six sub-bit groups (16, 17, 18, 19, 20, 21).

4. A method according to one of the preceding claims, **characterised in that** 64 bits are used for a whole bit group (10).

5. A method according to one of the preceding claims, **characterised in that** in each case two successive bit groups (10) are combined into a main bit group.

6. A method according to one of the preceding claims, **characterised in that** in each case a plurality of successive main bit groups are combined into a block.

7. A method according to claim 6, **characterised in that**, in each bit group (10) within the zones (11, 13, 22) reserved for the control data, four bits (12) are provided as preamble, in particular for identifying the start of the block and/or different channels.

8. A method according to one of the preceding claims, **characterised in that** the check bits (28, 29) from in each case 96 successive bit groups (10) are combined into a check-back signal.

9. A method according to one of the preceding claims, **characterised in that** a left/right code is allocated to a certain bit position (24) in each bit group (10) within the zones (11, 13, 22) reserved for the control data.

10. A method according to one of the preceding claims, **characterised in that** four bits (14) suitable for the transmission of additional signals are provided in each bit group (10) within the zones (11, 13, 22) reserved for the control data.

11. A method according to one of the preceding claims, **characterised in that** a parity code is allocated to a certain bit position (30) in each bit group (10) within the zones (11, 13, 22) reserved for the control data.

12. A method according to one of the preceding claims, **characterised in that** an SPDIF block code is allocated to a certain bit position (23) in each bit group (10) within the zones (11, 13, 22) reserved for the control data.

13. A method according to one of the preceding claims, **characterised in that** a validation code is allocated to a certain bit position (25) in each bit group (10) within the zones (11, 13, 22) reserved for the control data.

14. A method according to one of the preceding claims, **characterised in that** a user code is allocated to a certain bit position (26) in each bit group (10) within the zones (11, 13, 22) reserved for the control data.

15. A method according to one of the preceding claims, **characterised in that** a channel status code is allocated to a certain bit position (27) in each bit group (10) within the zones (11, 13, 22) reserved for the control data.

16. A method according to one of the preceding claims, **characterised in that** optical waveguides and/or electric lines are used as the data lines.

17. A method according to one of the preceding claims, **characterised in that** coding of the individual bits is performed by means of biphase coding.

18. Use of the method according to one of the preceding claims in a stationary communications system.

19. Use of the method according to one of claims 1 to 18 in a mobile communications system (31).

## Revendications

1. Procédé de transmission synchrone de données pour une transmission commune de données de source et de données de commande, numériques entre des sources et des puits de données (32, 33, 34, 35, 36, 37, 38, 39, 40, 41, 42) reliés par des lignes de transmission de données (43), selon lequel,
les données de source et de commande sont transmises dans un format prescrivant une succession cadencée de différents groupes de bits (1, 10) de même longueur,
et pour les données de source et données de commande on a réservé des positions de bits déterminées,
les positions de bits réservées pour les données de source formant dans un groupe de bits (1, 10), une zone cohérente (4, 15),
**caractérisé en ce que**
la zone (15) réservée pour les données de source dans un groupe de bits (10) est subdivisée en plusieurs groupes partiels de bits (16, 17, 18, 19, 20, 21) de même longueur,
indépendamment des données de commande, les données de source attribuées à chaque groupe partiel de bits (16, 17, 18, 19, 20, 21) sont associées à une certaine source de données/puits de données (32, 33, 34, 35, 36, 37, 38, 39, 40, 41,42) et
dans chaque groupe de bits (10), à l'intérieur des zones (11, 13, 22) réservées aux données de commande, on a deux bits de contrôle (28, 29) utilisés pour la transmission de signaux de contrôle et les bits de contrôle (28, 29) de groupes de bits (10) successifs, sont regroupés en un signal de contrôle.

2. Procédé selon la revendication 1,
**caractérisé en ce qu'**
on utilise huit bits (un octet) pour des groupes de bits partiels (16, 17,18,19, 20, 21).

3. Procédé selon l'une quelconque des revendications 1 ou 2,
**caractérisé en ce qu'**
on subdivise la zone (15) réservée aux données de source en six groupes de bits partiels (16, 17, 18, 19, 20, 21).

4. Procédé selon l'une quelconque des revendications précédentes,
**caractérisé en ce qu'**
on utilise 64 bits pour l'ensemble du groupe de bits (10).

5. Procédé selon l'une quelconque des revendications précédentes,
**caractérisé en ce qu'**
on regroupe chaque fois deux groupes de bits successifs (10) en un groupe de bits, principal.

6. Procédé selon l'une quelconque des revendications précédentes,
**caractérisé en ce qu'**
on regroupe plusieurs groupes de bits, principaux successifs en un bloc.

7. Procédé selon la revendication 6,
**caractérisé en ce que**
dans chaque groupe de bits (10) dans les zones (11, 13, 23) réservées aux données de commande, on a quatre bits (12) comme préambule notamment pour caractériser le début du bloc et/ou des canaux différents.

8. Procédé selon l'une quelconque des revendications précédentes,
**caractérisé en ce que**
les bits de contrôle (28, 29) de chaque fois 96 groupes de bits (10) successifs sont regroupés en un signal de contrôle.

9. Procédé selon l'une quelconque des revendications précédentes,
**caractérisé en ce que**
dans chaque groupe de bits (10), à l'intérieur des zones (11, 13, 22) réservées aux données de commande, on attribue une caractéristique gauche/droite à une certaine position de bit (24).

10. Procédé selon l'une quelconque des revendications précédentes,
**caractérisé en ce que**
dans chaque groupe de bits (10), à l'intérieur des zones (11, 13, 22) réservées aux données de commande, on a quatre bits (14) prévus pour la transmission d'autres signaux.

11. Procédé selon l'une quelconque des revendications précédentes,
**caractérisé en ce que**
dans chaque groupe de bits (10) à l'intérieur des zones (11, 13, 22) réservées aux données de commande, on attribue une caractéristique de parité à une certaine position de bit (30).

12. Procédé selon l'une quelconque des revendications précédentes,
**caractérisé en ce que**
dans chaque groupe de bits (10) à l'intérieur des zones (11, 13, 22) réservées aux données de commande, on attribue une caractéristique de bloc SPDIF à une position de bit déterminée (23).

13. Procédé selon l'une quelconque des revendications précédentes,
**caractérisé en ce que**
dans chaque groupe de bits (10) à l'intérieur des zones (11, 13, 22) réservées aux données de commande, on attribue une caractéristique de validation à une certaine position de bit (25).

14. Procédé selon l'une quelconque des revendications précédentes,
**caractérisé en ce que**
dans chaque groupe de bits (10) à l'intérieur des zones (11, 13, 22) réservées aux données de commande, on attribue une caractéristique d'utilisateur à une certaine position de bit (26).

15. Procédé selon l'une quelconque des revendications précédentes,
**caractérisé en ce que**
dans chaque groupe de bits (10) à l'intérieur des zones (11, 13, 22) réservées aux données de commande, on attribue une caractéristique d'état de canal à une certaine position de bit (27).

16. Procédé selon l'une quelconque des revendications précédentes,
**caractérisé en ce que**
les lignes de transmission de données (43) sont des guides de lumière et/ou des lignes électriques.

17. Procédé selon l'une quelconque des revendications précédentes,
**caractérisé en ce que**
le codage des différents bits se fait par un codage biphasé.

18. Application du procédé selon l'une quelconque des revendications précédentes à un système de communication stationnaire.

19. Application du procédé selon l'une quelconque des revendications 1 à 18 à un système de communication mobile (31).
